# EUROPEAN PATENT SPECIFICATION

(11) **EP 2 455 941 B1**
(45) Date of publication and mention of the grant of the patent: **26.06.2013**
(21) Application number: 11166028.8
(22) Date of filing: 13.05.2011
(51) Int. Cl.: G11B 27/28, G06F 3/06, H04L 29/00, G11B 27/00, H04N 5/76

(54) **Network Recorder, recording device, and recorder control method**
Netzwerk Recorder, Aufnahmevorrichtung und Aufnahmesteuerverfahren
Enregistreur reseau, dispositif d'enregistrement et procédé de contrôle de l'enregistreur

(30) Priority: 17.11.2010 JP 2010257249
(43) Date of publication of application: 23.05.2012
(73) Proprietor: Kabushiki Kaisha Toshiba, Tokyo 105-8001 (JP)
(72) Inventor: Koshino, Naozumi, Tokyo 105-8001 (JP); Honsawa, Kunio, Tokyo 105-8001 (JP)
(74) Representative: HOFFMANN EITLE

(56) References cited:
- WO-A2-01/13277
- US-A1- 2006 002 264
- US-A1- 2008 147 874
- US-A1- 2009 268 903

## Description

### FIELD

Embodiments described herein relate generally to a recorder, a recording device, and a recorder control method.

### BACKGROUND

In recent years, with the advancement in the home network technology, it has become common practice that video content recorded on a recorder is copied or moved to another device via a network. For example, it has become common practice that video content recorded on a recorder, which can record a television program, is transmitted to a recording device connected via a wired or wireless local area network (LAN), and is copied into an optical disk, such as a Blue-ray disk (BD) or a digital versatile disk (DVD), by the recording device.

Meanwhile, since optical disks have a limited recording capacity, content data may not be copied entirely into a single optical disk depending on the data volume. In such a case, the device checks the recording capacity and the remaining disk space of an optical disk that is inserted therein, and the image quality of content data is lowered to ensure that the content data is entirely stored in the optical disk.

A conventional recorder cannot understand whether a recording device that is connected to the recorder via a network, such as a wireless LAN, has a data compression function capable of compressing the data volume of content data (e.g., a bit-rate converting function, a data compression function, etc.). Therefore, when content data is copied or moved to a recording device, such as an optical disk, via the network, the conventional recorder cannot control how the content data is to be recorded.
US 2009/268903 A1 relates to network storage systems, and more particularly, a network storage server with integrated encryption, compression and deduplication capability, and describes: a storage server that performs security related functions (e.g., classification in indexing, compression, encryption/decryption) on data; and primary persistent storages (PPS) that is managed by the storage server and stores the data.
WO 01/13277A2 relates to videography, and more particularly, to a network-based system and method for storing, retrieving, delivering, and processing video images across various system platforms. WO 01/13277A2 discloses a video server that stores the video image uploaded by the network upload device onto one or more memory devices internal to the video server or onto an external memory device such as an SSA disk array, a tape or optical drive, or other similar memory devices.

### SUMMARY

In general, according to one embodiment, a recorder comprises a functional information receiving module, a function determining module, and a sending module. The functional information receiving module is configured to receive, from a recording device connected to the recorder via a network, functional information that indicates whether the recording device has a compression function of compressing the volume of content data. The function determining module is configured to determine, based on the functional information received by the functional information receiving module, whether the recording device has the compression function. The sending module is configured to send an instruction to the recording device that is determined by the function determining module to have the compression function to compress and store the content data.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a network content copying system according to an embodiment;
FIG. 2 is an exemplary schematic diagram of a portion of functional information sent from a recording device in the embodiment;
FIG. 3 is an exemplary diagram of a device selection screen in the embodiment;
Fig. 4 is an exemplary diagram of a drive selection screen in the embodiment;
FIG. 5 is an exemplary diagram of a compression instruction receiving screen in the embodiment;
FIG. 6 is an exemplary diagram of a content selection screen that is used to select content to be sent to an optical disk in the embodiment;
FIG. 7 is an exemplary schematic diagram of a portion of content metadata that contains a compression instruction regarding content data in the embodiment; and
FIG. 8 is an exemplary flowchart of a content data sending process performed by the recorder in the embodiment.

### DETAILED DESCRIPTION

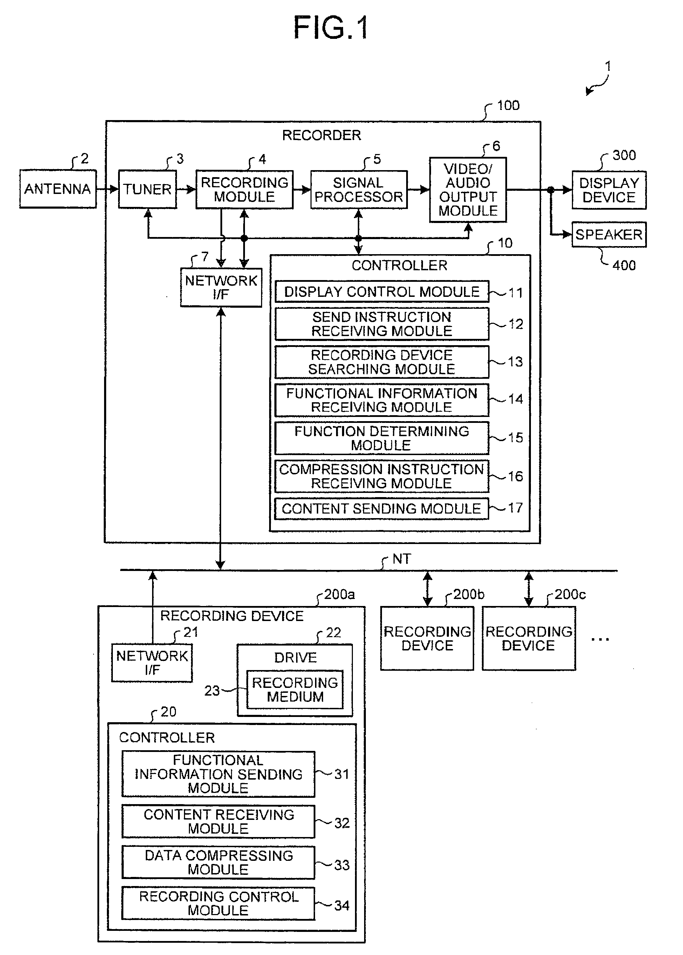

FIG. 1 is a block diagram of a network content copying system 1 according to an embodiment. As illustrated in FIG. 1, the network content copying system 1 comprises a recorder 100 and a plurality of recording devices (200a, 200b, 200c, ...), which are communicably connected by a network NT, such as a wired local area network (LAN) or a wireless LAN. In the following, the recording devices (200a, 200b, 200c, ...) are collectively referred to as recording devices 200.

To the recorder 100, a display device 300 and a speaker 400 are connected via a bus or an interface (I/F). The display device 300 may comprise, for example, a liquid crystal display (LCD) or a plasma display. The speaker 400 may be built in the display device 300.

First, described below is a hardware configuration of the recorder 100, which is used for recording program content (hereinafter, "content") of a program that is broadcast by digital broadcasting. As illustrated in FIG. 1, the recorder 100 comprises a tuner 3, a recording module 4, a signal processor 5, a video/audio output module 6, a network I/F 7, and a controller 10, which are interconnected by a bus or the like.

In the embodiment, the recorder 100 is described as a hard disk drive (HDD) recorder comprising an HDD as the recording module 4. However, alternatively, the recorder 100 may also be a television receiver capable of simultaneous recording, in an built-in HDD, the content data of programs being broadcast on a plurality of channels. In this case, the display device 300 and the speaker 400 are built in the recorder 100.

The tuner 3 receives content data from a broadcasting station via an antenna 2, and outputs the content data to the recording module 4 and the controller 10. The content data refers to a transport stream (TS) that is obtained by multiplexing motion video data, audio data, and other control data.

According to instructions from the controller 10, the recording module 4 records the content data output by the tuner 3. According to instructions from the controller 10, the signal processor 5 converts the content data recorded on the recording module 4 into video and audio signals, and outputs those signals to the video/audio output module 6.

The video/audio output module 6 outputs the video and audio signals to the display device 300 and the speaker 400, respectively, via various interfaces. Consequently, the video in the content is displayed on the display device 300, and the audio in the content is output from the speaker 400 in synchronization with the displayed video.

The controller 10 comprises a central processing unit (CPU), a read only memory (ROM), and a random access memory (RAM) . The controller 10 controls the signal processor 5 and the video/audio output module 6, and performs various types of processing on the video recorded on the recording module 4.

Described below is a hardware configuration of the recording device 200. As illustrated in FIG. 1, the recording device 200 mainly comprises a network 1/F 21, a drive 22, and a controller 20. The drive 22 may be a hard disk drive (HDD) provided with a hard disk as a recording medium 23, or a Blue-ray disk (BD) drive or a digital versatile disk (DVD) drive that is used by inserting therein optical disks such as BDs or DVDs as the recording medium 23, respectively.

The recording method of the recording device 200 is not particularly limited. The drive 22 may be an HDD used with magnetic disks. The drive 22 may also be a DVD drive or a BD drive used with optical disks. Moreover, the recording device 200 may comprise more than one drive 22.

The controller 20 comprises a CPU, a ROM, and a RAM, and controls the drive 22 to record the content data received via the network I/F 21 on the recording medium 23.

Described below is a functional configuration of the recorder 100. In the controller 10 of the recorder 100, the CPU loads a computer program from the ROM into the RAM and executes it. With this, as illustrated in FIG. 1, the controller 10 implements functional modules including a display control module 11, a send instruction receiving module 12, a recording device searching module 13, a functional information receiving module 14, a function determining module 15, a compression instruction receiving module 16, and a content sending module 17.

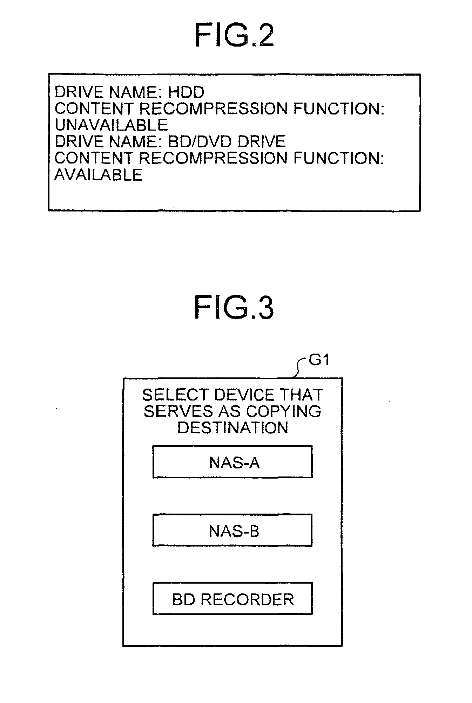

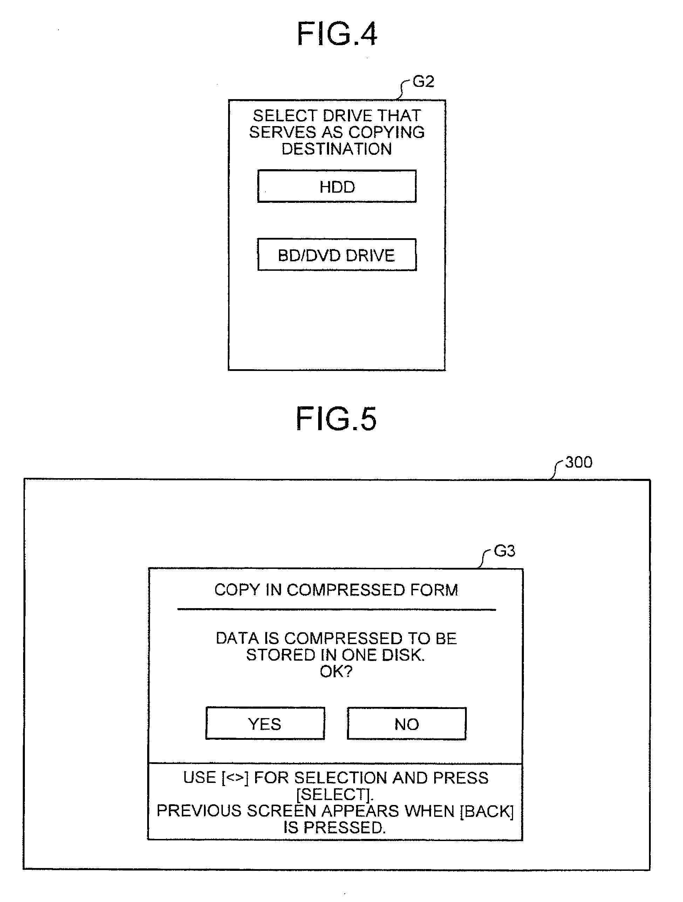

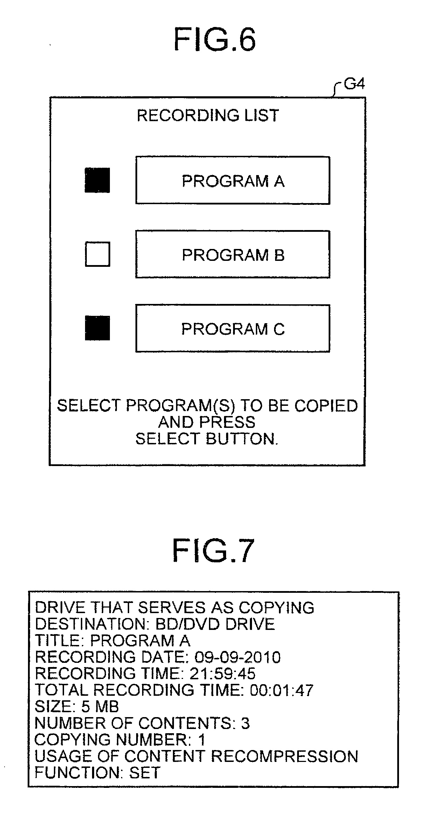

The display control module 11 displays an electronic program guide (EPG) obtained via the tuner 3, a list of contents stored in the recording module 4, a menu screen enabling selection of operations such as recording or playing, and a graphical user interface (GUI) enabling input of various selections on the display device 300 via the video/audio output module 6. Besides, the display control module 11 displays GUIs such as a device selection screen G1 (see FIG. 3), a drive selection screen (see FIG. 4), a compression instruction receiving screen G3 (see FIG. 5), a content selection screen G4 (see FIG. 6) on the display device 300.

The send instruction receiving module 12 receives, from the user, a send instruction for sending the content data to at least one of the recording devices 200 connected to the network NT. The send instruction includes an instruction to copy content data or an instruction to move content data. Hereinafter, copying and moving of content data is simply referred to as "copying".

For example, if copying content is selected from a menu screen (not illustrated) displayed by the display control module 11 for selection of operations such as recording or playing, or if a copy key on a remote controller (not illustrated) is pressed, the send instruction receiving module 12 receives this event as a send instruction.

If the send instruction receiving module 12 receives a send instruction, the recording device searching module 13 searches for the recording devices 200 connected to the network NT. More specifically, to search for the recording devices 200 connected to the network NT, the recording device searching module 13 periodically broadcasts a search message to each device connected to the network NT. Upon receiving the search message, the recording device 200 sends back to the recorder 100 functional information indicating the function of the recording device 200. In this manner, the recorder 100 searches for the recording devices 200.

The recording device searching module 13 may search for the recording devices 200 when the recorder 100 starts up or periodically at predetermined time intervals.

The functional information receiving module 14 receives, from each of the recording devices 200 connected to the network NT, functional information indicating the function of the recording device 200.

The functional information received from the recording device 200 includes the Internet protocol (IP) address of the recording device 200, drive information related to the drive 22 in the recording device 200, and medium information of the recording medium 23 of the drive 22, etc. The functional information further includes information indicating whether the recording device 200 has a compression function capable of reducing (compressing) the data volume of content data and, if it has a compression function, information on the compression function.

The compression function of the recording device 200 is, for example, a function of downconverting content data by changing the bit rate and the image quality of the content data (content recompression function), etc. If the recording device 200 has a function of automatically compressing content data to fit within the available recording capacity of an optical disk (the recording medium 23), the functional information includes information on the compression function.

FIG. 2 illustrates an example of a portion of functional information sent from the recording device 200. The functional information illustrated in FIG. 2 indicates that an HDD and a BD/DVD drive that functions as a BD drive as well as a DVD drive are equipped as the drive 22. The functional information illustrated in FIG. 2 also indicates that the HDD has no content recompression function, while the BD/DVD drive has a content recompression function.

Described below is the operation of the recorder 100 to display, based on the functional information, the device selection screen G1 (see FIG. 3) and the drive selection screen G2 (see FIG. 4) on the display device 300.

When the send instruction receiving module 12 receives a send instruction, the display control module 11 displays, based on the functional information received by the functional information receiving module 14 from each of the recording devices 200, the device selection screen G1 (see FIG. 3) on the display device 300 that enables selection of the recording device 200 (device) as copying destination of content.

FIG. 3 illustrates an example of the device selection screen G1. As illustrated in FIG. 3, on the device selection screen G1, the display control module 11 displays all the recording devices 200 connected to the recorder 100 via the network NT in a selectable manner. In the example of FIG. 3, the recording devices 200 displayed on the device selection screen G1 are network-attached storages (NAS), i.e., NAS-A, NAS-B, not equipped with an optical drive and a BD recorder equipped with an optical drive.

Based on the device selection screen G1, the send instruction receiving module 12 receives from the user a selection of the recording device 200 to be copying destination (a destination). For example, if "BD recorder" is selected in FIG. 3, the send instruction receiving module 12 receives a notification that the BD recorder is selected as the recording device 200 to be copying destination.

Once the recording device 200 is selected as copying destination on the device selection screen G1, the display control module 11 refers to the functional information received by the functional information receiving module 14, and displays on the display device 300 the drive selection screen G2 (see FIG. 4) that enables selection of the drive 22 to be copying destination from among the drive devices installed in the selected recording device 200.

FIG. 4 illustrates an example of the drive selection screen G2. For example, when "BD recorder" is selected in FIG. 3, the display control module 11 refers to the drive information specified in the functional information of the BD recorder, and displays "HDD" and "BD/DVD drive" as drives installed in the BD recorder.

Based on the drive selection screen G2, the send instruction receiving module 12 receives a selection of the drive 22 to be copying destination. For example, when "BD/DVD drive" is selected in FIG. 4, the send instruction receiving module 12 receives a notification that "BD/DVD drive" is selected as the drive 22 to be copying destination.

The function determining module 15 determines, based on the functional information received by the functional information receiving module 14 from the recording device 200, whether the recording device 200 selected on the device selection screen G1 or the drive 22 selected on the drive selection screen G2 has a content data compression function.

More specifically, the function determining module 15 determines whether the drive 22 selected on the drive selection screen G2 is an optical drive, such as a BD drive or a DVD drive. If the selected drive 22 is an optical drive that uses an optical disk, such as a BD and a DVD, as the recording medium 23, the function determining module 15 further determines whether the drive 22 has a content data compression function.

On the other hand, if the selected drive 22 is determined to be a non-optical drive, the function determining module 15 displays the content selection screen G4 (see FIG. 6) on the display device 300 without determining whether the drive has a content data compression function. Because a non-optical drive, such as an NAS and an HDD, has sufficiently large recording capacity in general, content data is less likely to need to be compressed. Therefore, the recorder 100 sends content data in an uncompressed form to the recording device 200 without checking whether it has a content data compression function.

Described below is a process of prompting a user to determine whether to compress target content on the compression instruction receiving screen G3 (see FIG. 5) .

When the function determining module 15 determines that the selected drive 22 has a content data compression function, the display control module 11 displays on the display device 300 the compression instruction receiving screen G3 (see FIG. 5) that enables selection of usage of the content compression function.

FIG. 5 illustrates an example of the compression instruction receiving screen G3. If, as described above, the recording device 200 has a compression function capable of compressing content data to fit within the available recording capacity of an optical disk (the recording medium 23), as illustrated in FIG. 5, a message such as "Data is compressed to be stored in one disk. OK?" is displayed on the compression instruction receiving screen G3. In other words, on the compression instruction receiving screen G3, a notification that the selected recording device 200 (the BD/DVD drive) has a content data compression function is displayed.

How to display the compression function is not limited thereto. As another example, such a notification may be displayed that indicates the recording device 200 having a content data compression function and the drive 22 with a symbol, a comment, or the like on the device selection screen G1 illustrated in FIG. 3 or the drive selection screen G2 illustrated in FIG. 4.

On the compression instruction receiving screen G3, a message to select whether to use the compression function of the recording device 200 is also displayed. In other word, as illustrated in FIG. 5, on the compression instruction receiving screen G3, select keys are displayed to receive a selection from a user as to whether the content compression function is used for copying.

If the selected recording device 200 or the selected drive 22 has a content data compression function, the compression instruction receiving module 16 receives from the user a selection whether to use the compression function of the recording device 200. In other words, as illustrated in FIG. 5, if the user selects "Yes" by using the left-right key on the remote controller and presses the select key, the compression instruction receiving module 16 receives an instruction to copy content compressed using the content compression function of the BD/DVD drive of the recording device 200.

Described below is a process of prompting the user to select content (target content) to be copied into the recording device 200 on the content selection screen G4 (see FIG. 6).

When, on the compression instruction receiving screen G3 illustrated in FIG. 5, "Yes" indicating an instruction of usage of the compression function is selected, the display control module 11 displays on the display device 300 the content selection screen G4 (see FIG. 6) that enables selection of target content.

FIG. 6 illustrates an example of the content selection screen G4. The display control module 11 displays, based on a list of contents stored in the recording module 4, titles and thumbnails (not illustrated) of the contents on the content selection screen G4. When the user moves a cursor over desired contents by using the up-down key and then presses the select key on the remote controller (not illustrated), one or more target contents are selected.

Examples of contents displayed on the content selection screen G4 include, in addition to the contents stored in the recording module 4 of the recorder 100, contents stored in a recording medium of other recording devices 200 (second recording device) such as the recording devices 200b and 200c illustrated in FIG. 1.

The send instruction receiving module 12 serves as a selected content receiving module that receives from the content selection screen G4 the selection of content to be sent to the recording device 200. If, for example, the select key is pressed while the programs A and C are selected as illustrated in FIG. 6, the send instruction receiving module 12 receives the programs A and C as target contents and receives an instruction to copy the content data of these programs.

The content sending module 17 sends to the recording device 200 content metadata that contains various types of control information used to store the content data in the recording device 200. If the compression instruction receiving module 16 receives an instruction to use the content compression function, the content sending module 17 sends, to the recording device 200, content metadata that contains a compression instruction to record the content data in the compressed form.

If the target content selected on the content selection screen G4 is stored in the recording module 4 thereof, the content sending module 17 sends the content data of the target content to the recording device 200. If, as described above, the target content is stored in another recording device 200 (200b, 200c, etc.), the content sending module 17 sends information indicating the location where the content data of the target content is stored, such as uniform resource locator (URL), to the recording device 200.

FIG. 7 illustrates an example of a portion of content metadata that contains a compression instruction regarding content data. As illustrated in FIG. 7, the content metadata contains the drive name of transfer destination (copying destination), the title of target content, the date and time of recording the target content, the total recording time of the target content, the data size of the target content, and the like. The content metadata also contains, as a content data compression instruction, information indicating whether to use the content recompression function. The content metadata further contains the copying number indicating the total number of contents selected on the content selection screen and the copying order in which the contents are copied and then stored in the recording medium.

On the other hand, if "No" is selected on the screen illustrated in FIG. 5, the content sending module 17 sends, to the recording device 200, both the content data of the target contents and the content metadata that contains no compression instruction to recompress the content data.

If the function determining module 15 determines that the recording device 200 has a content compression function, the content sending module 17 may automatically send both the abovementioned content metadata that contains the compression instruction and the content data of the target contents to the recording device 200 without displaying the compression instruction receiving screen G3.

Described below is a functional configuration of the recording device 200. In the controller 20 of the recording device 200, a CPU loads a computer program from a ROM into a RAM and executes it. With this, as illustrated in FIG. 1, the controller 20 implements functional modules including a functional information sending module 31, a content receiving module 32, a data compressing module 33, and a recording control module 34.

When the recording device 200 receives the abovementioned search message from the recorder 100, the functional information sending module 31 sends the functional information indicating the function of the recording device 200 to the recorder 100 via the network I/F 21 and the network NT.

The content receiving module 32 receives both the content data of target content and the content metadata from the recorder 100.

Meanwhile, as described above, if target content selected on the content selection screen G4 is stored in the other recording device 200 (200b and 200c), the content receiving module 32 may receive or download the content data from the other recording device 200.

If the content metadata received by the content receiving module 32 contains the compression instruction, according to the compression instruction, the data compressing module 33 performs a compression operation to reduce the data volume of the received content data.

More specifically, based on information such as the size, the file format, and the bit rate of the content data specified in the content metadata, the data compressing module 33 recompresses the content data to fit within the available recording capacity of the recording medium 23.

If the recording device 200 has the recompression function of compressing content data to fit within the available recording capacity of an optical disk (the recording medium 23), the data compressing module 33 compresses the data to fit within the recording capacity of a single optical disk by the recompression function. That is, the data compressing module 33 selects such a bit rate that ensures that the data volume of received content data fits in the available recording capacity of an optical disk, and recompresses the content data at the selected bit rate.

Besides, the data compressing module 33 may compress the content data by changing the bit rate and the image quality or by performing format conversion using codec.

If received content data does not fit in the available recording capacity of a single optical disk, the data compressing module 33 sends, to the recorder 100, an error message indicating that data does not fit in the capacity of a single optical disk. Thus, the recorder 100 displays the error message on the display device 300.

The recording control module 34 controls the drive 22 and records the content data compressed by the data compressing module 33 on the recording medium 23.

If the content metadata received by the content receiving module 32 contains no compression instruction, the recording control module 34 stores the received content data in the uncompressed form. If all received content data cannot be stored in a single optical disk, the recording control module 34 copies the content data into a plurality of optical disks.

Although, in the above example, whether the drive 22 has a content data compression function is determined if the drive 22 is an optical drive, the condition for the determination is not limited thereto. As another example, the function determining module 15 may determine whether the available recording capacity of the recording medium 23 as copying destination is larger than a predetermined value. In this case, if the available recording capacity of the recording medium 23 is smaller than the value, it is determined whether the drive 22 has a content data compression function.

With this configuration, even if content data is sent to the recording medium 23 that is not an optical disk, it is possible to copy the content in a compressed form using the compression function depending on the remaining capacity (available recording capacity).

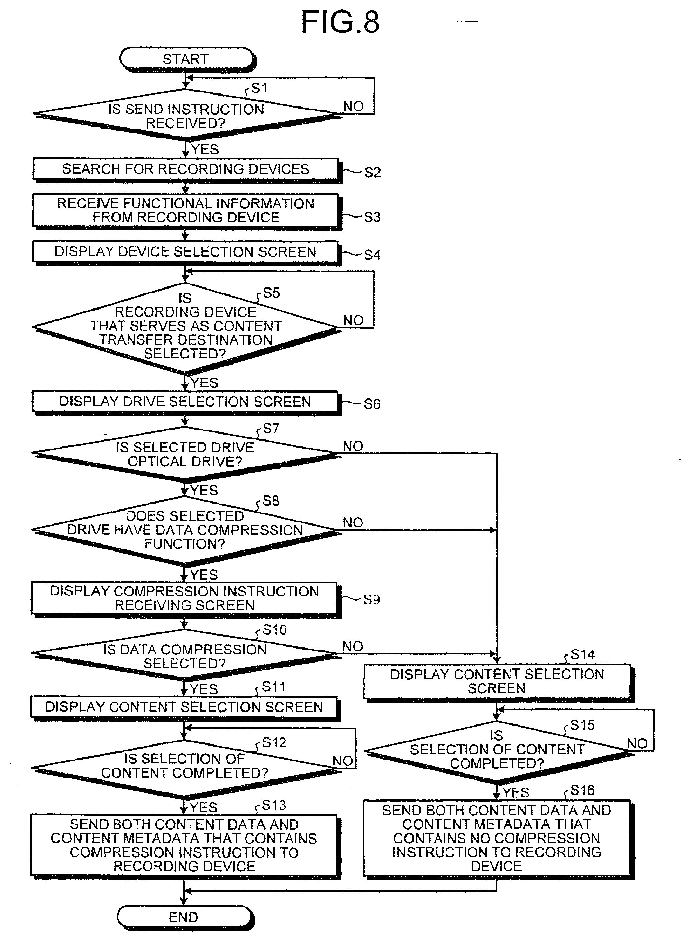

Described below is a content data sending process performed by the recorder 100. FIG. 8 is a flowchart of a content data sending process performed by the recorder 100.

First, the recorder 100 determines whether a send instruction regarding contents is received (S1). If copying is selected from a menu screen (not illustrated) or if a copy key on a remote controller (not illustrated) is pressed, the send instruction receiving module 12 receives a send instruction regarding content (Yes at S1). If no send instruction regarding content is received (No at S1), the recorder 100 returns to S1 and waits for an instruction.

Subsequently, to search for the recording devices 200 connected to the network NT, the recording device searching module 13 periodically broadcasts a search message to each device connected to the network NT and searches for the recording devices 200 (S2) .

Upon receiving the search message, the recording device 200 sends the functional information indicating the function thereof to the recorder 100. The functional information receiving module 14 of the recorder 100 then receives the functional information indicating the function of the recording device 200 from the recording device 200 (S3).

After that, the display control module 11 displays, based on the functional information received at S3, the device selection screen G1 on the display device 300 that enables selection of the recording device 200 as the transfer destination of the contents (S4).

The recorder 100 determines whether the recording device 200 to be content transfer destination is selected (S5) . If not (No at S5), returning to S5, the recorder 100 waits for selection. On the other hand, the recording device 200 to be content transfer destination is selected (Yes at S5), the display control module 11 displays, based on the functional information received at S3, the drive selection screen G2 that enables selection, from the drives 22 of the selected recording device 200, of the drive 22 of the content transfer destination (S6).

The recorder 100 determines whether the drive 22 selected on the drive selection screen G2 is an optical drive (S7) . If the selected drive 22 is not an optical drive (No at S7), the process control moves to S14. If the selected drive 22 is an optical drive (Yes at S7), the process control moves to S8.

The function determining module 15 determines whether the selected drive 22 has a content data compression function (S8).

If the drive 22 is determined to have a content data compression function (Yes at S8), the display control module 11 displays the compression instruction receiving screen G3 on the display device 300 (S9). On the other hand, if the drive 22 is determined to have no compression function (No at S8), the process control moves to S14.

After that, it is determined whether selection is made as to whether data is to be compressed on the compression instruction receiving screen G3 (S10). If it is determined that data is to be compressed (Yes at S10), the display control module 11 displays on the display device 300 the content selection screen G4 (see FIG. 6) that enables selection of target content (S11). The recorder 100 determines whether the selection of contents is completed on the content selection screen G4 (S12). while the selection of contents is ongoing (No at S12), returning to S12, the recorder 100 waits for an input. On the other hand, when the selection of target contents to be sent is completed (Yes at S12), the content sending module 17 sends the content data of the target contents to the recording device 200 together with the content metadata that contains a compression instruction instructing to compress the content data (S13), and the process ends.

At S14, the display control module 11 displays the content selection screen G4 (see FIG. 6) on the display device 300. The recorder 100 determines whether the selection of contents is completed on the content selection screen G4 (S15). While the selection of contents is ongoing (No at S15), returning to S15, the recorder 100 waits for an input. On the other hand, when the selection of target contents to be sent is completed (Yes at S15), the content sending module 17 sends the content data of the target contents to the recording device 200 together with the content metadata that contains no content data compressing instruction (S16), and the process ends.

In the description given above, the drive 22 to be copying destination is first selected through the device selection screen G1 and the drive selection screen G2, and then content is selected through the content selection screen G4. However, the selection sequence is not so limited. As another example, content may be selected through the content selection screen G4 before selecting copying destination through the device selection screen G1 and the drive selection screen G2. Besides, the timing of displaying the compression instruction receiving screen G3 is not limited as described above, and a compression instruction may be received at a different timing.

As described above, according to the embodiment, if a recording device connected via a network has a content data compression function, it is possible to send an instruction to the recording device to compress content data and store therein the compressed content data. This improves convenience to copy or move content data into a recording device that is connected via a network.

While the data compressing module 33 is described above as being provided to the recording device 200, it is not so limited. As another example, the data compressing module 33 may be provided to the recorder 100. In this case, if the recording device 200 has no data compression function, the data compressing module 33 of the recorder 100 may compress content data and send content metadata that contains the compression rate to the recording device 200. This reduces the data volume of content data that is sent from the recorder 100 to the recording device 200.

A computer program can be executed on a computer to realize the same function as the recorder 100 and the recording device 200 according to the embodiment. The computer program may be provided as being stored in a ROM in advance. The computer program may also be provided as being stored in a computer-readable storage device such as a compact disk read only memory (CD-ROM), a flexible disk (FD), a compact disk recordable (CD-R), or a digital versatile disk (DVD) in the form of an installable or executable file.

Further, the computer program may be stored in a computer connected over a network such as the Internet and downloaded therefrom via the network. Still further, the computer program may be provided or distributed through a network such as the Internet.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

## Claims

1. A recorder (100) comprising:
a functional information receiving module (14) configured to receive, from a recording device (200a) connected to the recorder (100) via a network (NT) and configured to perform recording on an optical disk, functional information that indicates whether the recording device (200a) has a compression function of compressing volume of content data so that the content data fits within an available recording capacity of one optical disk;
a destination receiving module (12) configured to receive a selection of a drive (22) of the recording device as destination to which the content data is to be sent;
a function determining module (15) configured to determine, if the drive (22) as destination the selection of which is received by the destination receiving module (12) is an optical drive, whether the optical drive has the compression function, based on the functional information received by the functional information receiving module (14),
a receiving module (G3) configured to receive, if the function determining module (15) determines that the optical drive has the compression function, a selection of whether to compress and store the content data in one optical disk; and
a sending module (17) configured to send, if the receiving module (G3) receives the selection to compress and store the content data, an instruction to the recording device (200a) comprising the optical disk to compress and store the content data in the one optical disk so that the content data fits within the available recording capacity of the one optical disk.

2. The recorder (100) of Claim 1, further comprising a selected content receiving module (12) configured to receive a selection of content data to be sent to the recording device (200a) from among content data stored in the recorder (100) or a second recording device (200a) that is connected to the recorder (100) via the network (NT), wherein
the sending module (17) is configured to send the instruction to the recording device (200a) to compress and store the content data the selection of which is received by the selected content receiving module (12).

3. The recorder (100) of Claim 1 or 2, further comprising a compression instruction receiving module (16) configured to receive, if the recording device (200a) has the compression function, a selection whether to use the compression function of the recording device (200a), wherein
the sending module (17) is configured to send, if the compression instruction receiving module (16) receives a selection to use the compression function, the instruction to the recording device (200a) to compress and store the content data.

4. The recorder (100) of any one of Claims 1 to 3, further comprising a display control module (11) configured to display a determination result of the function determining module (15) in association with the recording device (200a).

5. A recording device (200a) comprising:
a functional information sending module (31) configured to send, to a recorder (100) connected to the recording device (200a) via a network (NT), functional information that indicates whether the recording device (200a) has a compression function of compressing volume of the content data so that the content data fits within an available recording capacity of one optical disk ;
a receiving module (32) configured to receive from the recorder (100) an instruction to compress the volume of the content data and then store the content data so that the content data fits within the available recording capacity of the one optical disk;
a data compressing module (34) configured to compress, if the instruction is received and the recording device (200a) has the compression function, the content data with the compression function; and
a recording control module (34) configured to store the content data compressed by the data compressing module (33) in the optical disk.

6. A recorder control method applied to a recorder, comprising:
first receiving, from a recording device connected to the recorder via a network and configured to perform recording on an optical disk, functional information that indicates whether the recording device has a compression function of compressing volume of content data so that the content data fits within an available recording capacity of one optical disk;
second receiving a selection of a drive of the recording device as destination to which the content data is to be sent;
determining, if the drive as destination the selection of which is received by the second receiving is an optical drive, whether the optical drive has the compression function based on the functional information received at the first receiving;
third receiving, if the determining determines that the optical drive has the compression function, a selection of whether to compress and store the content data in one optical disk; and
sending, if the third receiving receives the selection to compress and store the content data, an instruction to the recording device comprising the optical disk to compress and store the content data in the one optical disk so that the content data fits within the available recording capacity of the one optical disk.

## Patentansprüche

1. Rekorder (100), umfassend:
ein Funktionalinformationsempfangsmodul (14), das eingerichtet ist zum Empfangen, von einer Aufzeichnungsvorrichtung (200a), die mit dem Rekorder (100) über ein Netzwerk (NT) verbunden ist und die eingerichtet ist, Aufzeichnen auf einer optischen Platte durchzuführen, von Funktionalinformation, die anzeigt, ob die Aufzeichnungsvorrichtung (200a) eine Komprimierungsfunktion eines Komprimierungsvolumens von Inhaltsdaten aufweist, so dass die Inhaltsdaten in eine verfügbare Aufzeichnungskapazität auf einer optischen Platte passen;
ein Zielempfangsmodul (12), das eingerichtet ist zum Empfangen einer Auswahl eines Laufwerks (22) der Aufzeichnungsvorrichtung als ein Ziel, an die die Inhaltsdaten zu senden sind;
ein Funktionsbestimmungsmodul (15), das eingerichtet ist zum Bestimmen, wenn das Laufwerk (22) als Ziel, dessen Auswahl von dem Zielempfangsmodul (12) empfangen wird, ein optisches Laufwerk ist, ob die optische Platte die Komprimierungsfunktion aufweist, basierend auf der von dem Funktionalinformationsempfangsmodul (14) empfangenen Funktionalinformation,
ein Empfangsmodul (G3), das eingerichtet ist zum Empfangen, falls das Funktionsbestimmungsmodul (15) bestimmt, dass das optische Laufwerk die Komprimierungsfunktion aufweist, einer Auswahl, ob die Inhaltsdaten in einer optischen Platte zu komprimieren und zu speichern sind; und
ein Sendemodul (17), das eingerichtet ist zum Senden, falls das Empfangsmodul (G3) die Auswahl zum Komprimieren und Speichern der Inhaltsdaten empfängt, eines Befehls an die Aufzeichnungsvorrichtung (200a), umfassend die optische Platte zum Komprimieren und Speichern der Inhaltsdaten in einer optischen Platte, so dass die Inhaltsdaten in die verfügbare Aufzeichnungskapazität der einen optischen Platte passen.

2. Rekorder (100) nach Anspruch 1, weiterhin umfassend ein ausgewählter Inhalt-Empfangsmodul (12), das eingerichtet ist zum Empfangen einer Auswahl von Inhaltsdaten, die an die Aufzeichnungsvorrichtung (200a) zu senden sind, aus Inhaltsdaten, die in dem Rekorder (100) oder einer zweiten Aufzeichnungsvorrichtung (200a), die mit dem Rekorder (100) über das Netzwerk (NT) verbunden ist, gespeichert sind, wobei
das Sendemodul (17) eingerichtet ist zum Senden des Befehls an die Aufzeichnungsvorrichtung (200a) zum Komprimieren und Speichern der Inhaltsdaten, deren Auswahl von dem ausgewählten Inhalt-Empfangmodul (12) empfangen wird.

3. Rekorder (100) nach Anspruch 1 oder 2, weiterhin umfassend ein Komprimierungsbefehl-Empfangsmodul (16), eingerichtet zum Empfangen, wenn die Aufzeichnungsvorrichtung (200a) die Komprimierungsfunktion aufweist, einer Auswahl, ob die Komprimierungsfunktion der Aufzeichnungsvorrichtung (200a) zu verwenden ist, wobei
das Sendemodul (17) eingerichtet ist zum Senden, falls das Komprimierungsbefehls-Empfangsmodul (16) eine Auswahl zum Verwenden der Komprimierungsfunktion empfängt, des Befehls an die Aufzeichnungsvorrichtung (200a) zum Komprimieren und Speichern der Inhaltsdaten.

4. Rekorder (100) nach einem der Ansprüche 1 bis 3, weiterhin umfassend ein Anzeigesteuermodul (11), das eingerichtet ist zum Anzeigen eines Bestimmungsergebnisses des Funktionsbestimmungsmoduls (15) in Assoziation mit der Aufzeichnungsvorrichtung (200a).

5. Aufzeichnungsvorrichtung (200a), umfassend:
ein Funktionalinformationssendemodul (31), das eingerichtet ist zum Senden, an einen Rekorder (100), der mit der Aufzeichnungsvorrichtung (200a) über ein Netzwerk (NT) verbunden ist, von Funktionalinformation, die anzeigt, ob die Aufzeichnungsvorrichtung (200a) eine Komprimierungsfunktion von Komprimierungsvolumen der Inhaltsdaten aufweist, so dass die Inhaltsdaten in eine verfügbare Aufzeichnungskapazität einer optischen Platte passen;
ein Empfangsmodul (32), das eingerichtet ist zum Empfangen, von dem Rekorder (100), eines Befehls zum Komprimieren des Volumens der Inhaltsdaten und dann Speichern der Inhaltsdaten, so dass die Inhaltsdaten in die verfügbare Aufzeichnungskapazität der einen optischen Platte passen;
ein Datenkomprimierungsmodul (34), das eingerichtet ist zum Komprimieren, falls der Befehl empfangen wird und die Aufzeichnungsvorrichtung (200a) die Komprimierungsfunktion aufweist, der Inhaltsdaten mit der Komprimierungsfunktion; und
ein Aufzeichnungssteuermodul (34), das eingerichtet ist zum Speichern der von dem Datenkomprimierungsmodul (33) komprimierten Inhaltsdaten auf der optischen Platte.

6. Rekordersteuerverfahren, angewandt auf einen Rekorder, umfassend:
Erstes Empfangen, von einer Aufzeichnungsvorrichtung, die mit dem Rekorder über ein Netzwerk verbunden ist und die eingerichtet ist, Aufzeichnen auf einer optischen Platte durchzuführen, von Funktionalinformation, die anzeigt, ob die Aufzeichnungsvorrichtung eine Komprimierungsfunktion eines Komprimierungsvolumens von Inhaltsdaten aufweist, so dass die Inhaltsdaten in eine verfügbare Aufzeichnungskapazität einer optischen Platte passen;
Zweites Empfangen einer Auswahl eines Laufwerks der Aufzeichnungsvorrichtung als ein Ziel, an die die Inhaltsdaten zu senden sind;
Bestimmen, falls das Laufwerk als Ziel, dessen Auswahl durch das zweite Empfangen empfangen wird, eine optische Platte ist, ob das optische Laufwerk eine Komprimierungsfunktion aufweist basierend auf der bei dem ersten Empfang empfangenen Funktionalinformation;
Drittes Empfangen, falls das Bestimmen bestimmt, dass das optische Laufwerk die Komprimierungsfunktion aufweist, einer Auswahl, ob die Inhaltsdaten in einer optischen Platte zu komprimieren und speichern sind; und
Senden, falls das dritte Empfangen die Auswahl zum Komprimieren und Speichern der Inhaltsdaten empfängt, eines Befehls an die Aufzeichnungsvorrichtung, umfassend die optische Platte zum Komprimieren und Speichern der Inhaltsdaten in der einen optischen Platte, so dass die Inhaltsdaten in die verfügbare Aufzeichnungskapazität der einen optischen Disk passen.

## Revendications

1. Enregistreur (100), comprenant :
un module de réception d'informations fonctionnelles (14) configuré de manière à recevoir, en provenance d'un dispositif d'enregistrement (200a) connecté à l'enregistreur (100) par l'intermédiaire d'un réseau (NT) et configuré de manière à mettre en oeuvre un enregistrement sur un disque optique, des informations fonctionnelles qui indiquent si le dispositif d'enregistrement (200a) présente une fonction de compression de volume de compression de données de contenu, de sorte que les données de contenu tiennent dans une capacité d'enregistrement disponible d'un disque optique ;
un module de réception de destination (12) configuré de manière à recevoir une sélection d'un lecteur (22) du dispositif d'enregistrement, en tant que destination vers laquelle les données de contenu doivent être envoyées ;
un module de détermination de fonction (15) configuré de manière à déterminer, lorsque le lecteur (22) dont la sélection en tant que destination est reçue par le module de réception de destination (12) est un lecteur optique, si le lecteur optique présente la fonction de compression, sur la base des informations fonctionnelles reçues par le module de réception d'informations fonctionnelles (14) ;
un module de réception (G3) configuré de manière à recevoir, lorsque le module de détermination de fonction (15) détermine que le lecteur optique présente la fonction de compression, une sélection déterminant s'il convient de compresser et de stocker les données de contenu dans un unique disque optique ; et
un module d'envoi (17) configuré de manière à envoyer, lorsque le module de réception (G3) reçoit la sélection déterminant qu'il convient de compresser et de stocker les données de contenu, une instruction, au dispositif d'enregistrement (200a) comprenant le disque optique, invitant à compresser et à stocker les données de contenu dans ledit disque optique unique, de sorte que les données de contenu tiennent dans la capacité d'enregistrement disponible dudit disque optique unique.

2. Enregistreur (100) selon la revendication 1, comprenant en outre un module de réception de contenu sélectionné (12) configuré de manière à recevoir une sélection de données de contenu à envoyer au dispositif d'enregistrement (200a) parmi des données de contenu stockées dans l'enregistreur (100) ou dans un second dispositif d'enregistrement (200a) qui est connecté à l'enregistreur (100) par l'intermédiaire du réseau (NT), dans lequel
le module d'envoi (17) est configuré de manière à envoyer, au dispositif d'enregistrement (200a), l'instruction invitant à compresser et à stocker les données de contenu dont la sélection est reçue par le module de réception de contenu sélectionné (12).

3. Enregistreur (100) selon la revendication 1 ou 2, comprenant en outre un module de réception d'instructions de compression (16) configuré de manière à recevoir, lorsque le dispositif d'enregistrement (200a) présente la fonction de compression, une sélection déterminant s'il convient d'utiliser la fonction de compression du dispositif d'enregistrement (200a), dans lequel
le module d'envoi (17) est configuré de manière à envoyer, lorsque le module de réception d'instructions de compression (16) reçoit une sélection déterminant qu'il convient d'utiliser la fonction de compression, au dispositif d'enregistrement (200a), l'instruction invitant à compresser et à stocker les données de contenu.

4. Enregistreur (100) selon l'une quelconque des revendications 1 à 3, comprenant en outre un module de commande d'affichage (11) configuré de manière à afficher un résultat de détermination du module de détermination de fonction (15) en association avec le dispositif d'enregistrement (200a).

5. Dispositif d'enregistrement (200a), comprenant :
un module d'envoi d'informations fonctionnelles (31) configuré de manière à envoyer, à un enregistreur (100) connecté au dispositif d'enregistrement (200a) par l'intermédiaire d'un réseau (NT), des informations fonctionnelles qui indiquent si le dispositif d'enregistrement (200a) présente une fonction de compression de volume de compression des données de contenu, de sorte que les données de contenu tiennent dans une capacité d'enregistrement disponible d'un disque optique unique ;
un module de réception (32) configuré de manière à recevoir, en provenance de l'enregistreur (100), une instruction invitant à compresser le volume des données de contenu et à stocker ensuite les données de contenu, de sorte que les données de contenu tiennent dans la capacité d'enregistrement disponible dudit disque optique unique ;
un module de compression de données (34) configuré de manière à compresser, lorsque l'instruction est reçue et lorsque le dispositif d'enregistrement (200a) présente la fonction de compression, les données de contenu, au moyen de la fonction de compression ; et
un module de commande d'enregistrement (34) configuré de manière à stocker les données de contenu compressées par le module de compression de données (33) dans le disque optique.

6. Procédé de commande d'enregistreur appliqué à un enregistreur, comprenant :
la réception, dans un premier temps, à partir d'un dispositif d'enregistrement connecté à l'enregistreur par l'intermédiaire d'un réseau et configuré de manière à mettre en oeuvre un enregistrement sur un disque optique, d'informations fonctionnelles qui indiquent si le dispositif d'enregistrement présente une fonction de compression de volume de compression de données de contenu, de sorte que les données de contenu tiennent dans une capacité d'enregistrement disponible d'un disque optique unique ;
la réception, dans un deuxième temps, d'une sélection d'un lecteur du dispositif d'enregistrement en tant que destination vers laquelle les données de contenu doivent être envoyées ;
la détermination, lorsque le lecteur dont la sélection en tant que destination est reçue au cours de la deuxième réception est un lecteur optique, du fait que le lecteur optique présente la fonction de compression, sur la base des informations fonctionnelles reçues au cours de la première réception ;
la réception, dans un troisième temps, lorsque l'étape de détermination détermine que le lecteur optique présente la fonction de compression, d'une sélection déterminant s'il convient de compresser et de stocker les données de contenu dans un disque optique unique ; et
l'envoi, lorsque la troisième étape de réception reçoit la sélection déterminant qu'il convient de compresser et de stocker les données de contenu, d'une instruction, au dispositif d'enregistrement comprenant le disque optique, invitant à compresser et à stocker les données de contenu dans ledit disque optique unique, de sorte que les données de contenu tiennent dans la capacité d'enregistrement disponible dudit disque optique unique.
